# EUROPEAN PATENT SPECIFICATION

(11) **EP 2 472 739 B1**
(45) Date of publication and mention of the grant of the patent: **22.05.2019**
(21) Application number: 10812266.4
(22) Date of filing: 25.08.2010
(51) Int. Cl.: G06F 3/01, H04B 7/24, H04W 88/02, G06F 1/16, H04M 1/725, H04M 1/60

(54) **METHOD AND TERMINAL FOR BLUETOOTH COMMUNICATION**
VERFAHREN UND ENDGERÄT ZUR BLUETOOTH-KOMMUNIKATION
PROCÉDÉ ET TERMINAL DE COMMUNICATION BLUETOOTH

(30) Priority: 26.08.2009 KR 20090079304; 23.11.2009 KR 20090113202
(43) Date of publication of application: 04.07.2012
(73) Proprietor: Samsung Electronics Co., Ltd., Suwon-si, Gyeonggi-do, 443-742 (KR)
(72) Inventor: KIM, Bo-min, Seoul 152-748 (KR); PARK, Min-kyu, Seongnam-si Gyeonggi-do 463-706 (KR); PARK, Yong-gook, Yongin-si Gyeonggi-do 446-581 (KR); KANG, Tae-young, Uijeongbu-si Gyeonggi-do 480-944 (KR); KIM, Seong-woon, Yongin-si Gyeonggi-do 448-532 (KR); KIM, Hyoung-il, Seongnam-si Gyeonggi-do 463-750 (KR)
(74) Representative: HGF Limited
(86) International application number: PCT/KR2010/005688
(87) International publication number: WO 2011/025253

(56) References cited:
- EP-A2- 1 528 769
- KR-A- 20060 012 948
- KR-A- 20060 039 810
- KR-A- 20060 048 283
- KR-A- 20080 101 958
- US-A1- 2006 094 402
- US-A1- 2007 188 323
- US-A1- 2007 213 045
- US-A1- 2008 195 735

## Description

### Technical Field

The present invention relates to a Bluetooth communication method and a terminal adopting the same, and more particularly, to a Bluetooth communication method in which a multimedia file is transmitted using a Bluetooth communication, and a terminal adopting the Bluetooth communication method.

### Background Art

Bluetooth is a wireless communication technique for transmitting data between mobile devices. Since Bluetooth uses low power (100 mW) at low cost, and divides a frequency band into multiple frequency subbands and uses them, Bluetooth can enable the transmission of data using multiple frequencies. Therefore, Bluetooth has increasingly attracted public attention as a wireless communication technique for mobile devices.

However, the setting of a Bluetooth communication between Bluetooth devices is generally complicated. Accordingly, it may often be difficult and timely for a Bluetooth device to search for and be connected to another Bluetooth device. The setting of a Bluetooth connection between Bluetooth devices may involve exchanging a password for security purposes, and a user interface (UI) for searching for a file to be transmitted after the Bluetooth pairing of Bluetooth devices may be complicated.

Since users expect Bluetooth to become easier and more convenient, a method is needed to transmit or receive data via Bluetooth in an easy, intuitive manner.

US-2008/0195735-A1 discloses methods of controlling the transfer of data between devices in which the manner of control is determined by a movement experienced by at least one of the devices.

EP-1528769-A2 discloses an electronic device comprising a speaker, a microphone, and a processor that executes pairing process with another electronic device.

US-2007/0213045-A1 discloses electronic equipment with a data transfer function using motion.

KR-10-2008/0101958-A discloses a Bluetooth connection method of a terminal capable of connecting, using Bluetooth communications, with another terminal which a user wants to connect to without using a searching procedure.

US-2007/0188323-A1 discloses motion detection notification in a portable device.

US-2006/094402-A1 discloses a security monitoring method in a Bluetooth device.

### Technical Problem

The present invention provides a Bluetooth communication method in which data is transmitted to an external terminal via a Bluetooth communication in response to a movement being detected during a Bluetooth standby mode, and a terminal adopting the Bluetooth communication method.

### Technical Solution

In accordance with a first aspect of the present invention, a Bluetooth communication method of a first terminal, according to claim 1, that communicates with a second terminal via Bluetooth is provided. The method comprises: setting the first terminal in a Bluetooth standby mode; in response to the detection of a movement during the Bluetooth standby mode, determining whether the first terminal is paired with the second terminal; in response to the first terminal not being paired with the second terminal, pairing the first terminal with the second terminal; and transmitting data to the second terminal via the Bluetooth communication; wherein the pairing comprises: outputting a Bluetooth device, BD, address as a voice signal; and in response to receipt of a voice signal requesting a Bluetooth connection from the second terminal, pairing the first terminal with the second terminal; and wherein the Bluetooth standby mode is an operating mode during which a voice output unit, a voice input unit, a motion sensor, and a Bluetooth communication unit of the first terminal are activated.

The voice signals may be dual-tone multi-frequency (DTMF) voice signals.

The second terminal may be a terminal set in the Bluetooth standby mode.

In accordance with a second aspect of the present invention, a first terminal, according to claim 4, that communicates with a second terminal via Bluetooth is provided. The first terminal comprises: a Bluetooth communication unit arranged to transmit data to or receive data from the second terminal via a Bluetooth communication; a motion sensor arranged to detect a movement of the first terminal; a voice output unit arranged to output voice data; and a control unit arranged to: set the first terminal in a Bluetooth standby mode; in response to a movement being detected by the motion sensor during the Bluetooth standby mode, determine whether the first terminal is paired with the second terminal; pair the first terminal with the second terminal if the first terminal is not paired with the second terminal; and control to transmit data to the second terminal via the Bluetooth communication; wherein, to pair the first terminal with the second terminal, the control unit is arranged to: convert a BD address of the first terminal into a voice signal; output the voice signal via the voice output unit; and in response to receipt of a voice signal requesting a Bluetooth connection from the second terminal, pair the first terminal with the second terminal; and wherein the Bluetooth standby mode is an operating mode during which the voice output unit, a voice input unit, the motion sensor, and the Bluetooth communication unit of the first terminal are activated.

The voice signals may be DTMF voice signals.

The second terminal may be a terminal set in the Bluetooth standby mode.

In accordance with a third aspect of the present invention, a second terminal, according to claim 9, that communicates with a first terminal via Bluetooth is provided. The second terminal comprises: a Bluetooth communication unit arranged to transmit data to or receive data from the first terminal via a Bluetooth communication; a motion sensor arranged to detect a movement of the second terminal; a voice output unit arranged to output voice data; and a control unit arranged to: set the second terminal in a Bluetooth standby mode; receive a Bluetooth device, BD, address as a voice signal from the first terminal; and transmit a voice signal requesting a Bluetooth connection to the first terminal; wherein the Bluetooth standby mode is an operating mode during which the voice output unit, a voice input unit, the motion sensor, and the Bluetooth communication unit of the second terminal are activated.

### Advantageous Effects

According to the present invention, it is possible to a Bluetooth communication method for transmitting data to an external terminal via Bluetooth in response to the detection of a movement during a Bluetooth standby mode and a terminal employing the Bluetooth communication method. Therefore, it is possible for a user to easily transmit data between terminals simply moving a terminal.

### Description of Drawings

FIG. 1 is a block diagram illustrating two Bluetooth terminals for transmitting a file, according to an embodiment of the present invention.
FIG. 2 is a flowchart illustrating a Bluetooth communication method for transmitting data between a first terminal and a second terminal, according to an embodiment of the present invention.
FIGS. 3 to 7 are diagrams illustrating an example of transmitting a file via a Bluetooth communication using the movement of the first terminal.
FIGS. 8 to 10 are diagrams illustrating an example of how the first terminal and the second terminal communicate with each other via Bluetooth in a case in which the first terminal and the second terminal are paired in advance.
FIG. 11 is a flowchart illustrating a Bluetooth communication method of the first terminal, according to an embodiment of the present invention.
FIGS. 12 and 13 are diagrams illustrating a case in which the second terminal is paired with a third terminal.
FIG. 14 is a diagram illustrating an example of a method to execute a Bluetooth standby mode.
FIGS. 15 to 17 are diagrams illustrating examples of a movement for executing the transmission of a file.
FIGS. 18 and 19 are diagrams illustrating an example of executing a direct view of an image file received by the second terminal.
FIGS. 20 to 22 are diagrams illustrating an example of displaying a message that confirms the completion of the execution of a direct view function;
FIG. 23 is a flowchart illustrating a Bluetooth communication method according to an embodiment of the present invention, in which Bluetooth pairing is performed using the times of the transmission and receipt of a voice signal.
FIG. 24 is a flowchart illustrating a Bluetooth communication method according to an embodiment of the present invention, in which Bluetooth pairing is performed using information of a voice signal.
FIGS. 25 to 27 are diagrams illustrating an example of performing Bluetooth pairing and the transmission of a file using a voice signal.
FIGS. 28 to 31 are diagrams illustrating an example of performing Bluetooth pairing using a voice signal.
FIGS. 32 to 37 are diagrams illustrating another example of performing Bluetooth pairing and the transmission of a file using a voice signal.

### Mode for Invention

The invention is described more fully hereinafter with reference to the accompanying drawings, in which exemplary embodiments of the invention are shown.

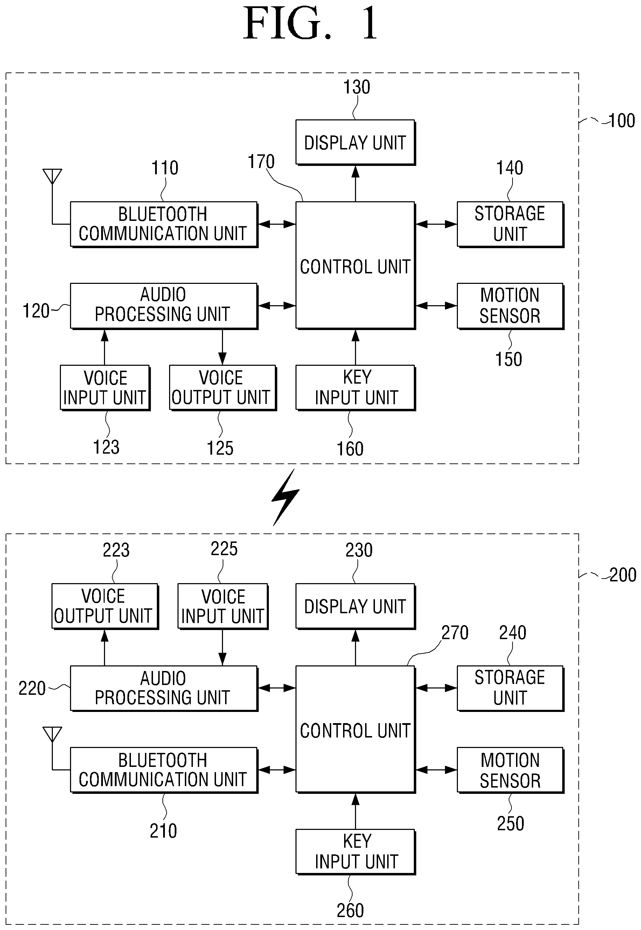

FIG. 1 is a block diagram illustrating two Bluetooth terminals for transmitting a file, according to an embodiment of the present invention. For convenience, a terminal for transmitting data may be referred to as a first terminal 100, and a terminal for receiving data may be referred to as a second terminal 200.

Referring to FIG. 1, the first terminal 100 includes a Bluetooth communication unit 110, an audio processing unit 120, a voice input unit 123, a voice output unit 125, a display unit 130, a storage unit 140, a motion sensor 150, a key input unit 160, and a control unit 170.

The Bluetooth communication unit 110 may correspond to a communication method for a personal area network (PAN) between terminals that may communicate with each other via a short-range wireless communication, and may be a wireless communication module capable of transmitting or receiving a signal by forming a communication channel over a short distance.

A typical Bluetooth communication method involves using a 2.4 GHz Industrial Scientific Medical (ISM) band. The ISM band may be freely used without a requirement of an additional license. According to the typical Bluetooth communication method, a 2MHz guard band and a 3.5 MHz guard band are provided below and above, respectively, the ISM band, thereby preventing any interference with other devices. The typical Bluetooth communication method also involves using a frequency hopping technique and may result in 1600 hoppings per second.

The Bluetooth communication unit 110 may perform a series of operations for transmitting or receiving data to one or more short-range-communicable terminals, which are terminals within a short range of the first terminal 100 and may wirelessly communicate with the first terminal 100 via a wireless interface. For example, the Bluetooth communication unit 110 may receive multimedia data transmitted by one or more short-range-communicable terminals, and may transmit the received multimedia data to the control unit 170.

The audio processing unit 120 may process a dual-tone multi-frequency (DTMF) signal provided by the control unit 170, and may output the processed DTMF signal to the voice output unit 125. For example, the term 'DTMF signal' indicates a type of audio signal obtained by converting the Bluetooth device (BD) address of a terminal into a DTMF using DTMF signaling, which is a communication technique for converting numeric data into a voice signal.

For example, a BD address '127;0;0;7' may be converted into a DTMF '127*0*0*7,' and a separator '#' may be inserted into the DTMF '127*0*0*7,' thereby generating a DTMF signal '#127*0*0*7.' The separator '#' may be inserted into a DTMF to allow the second terminal 200 to easily recognize the beginning of a DTMF signal even when the DTMF signal is transmitted repeatedly to the second terminal 200.

The voice input unit 123 may receive a voice signal or a DTMF signal from an external source, and may transmit the received signal to the audio processing unit 120. For example, the voice input unit 123 may receive a DTMF signal requesting Bluetooth pairing from the second terminal 200. For example, the voice input unit 123 may be implemented as a microphone.

The voice output unit 125 may output a processed DTMF signal provided by the audio processing unit 120. For example, the voice output unit 125 may be implemented as a speaker.

The display unit 130 may visually display various information regarding the state and the operation of the first terminal 100. The display unit 130 may also display a multimedia file to be transmitted via Bluetooth on a screen thereof. For example, the term 'multimedia file' includes a text file, an image file, a video file, a music file, and the like. The display unit 130 may display a file selected from the storage unit 140.

The storage unit 140 may store various programs and information for operating the first terminal 100. The storage unit 140 may also store various multimedia files.

The motion sensor 150 may detect the movement of the first terminal 100. For example, an acceleration sensor or a geomagnetic sensor may be used as the motion sensor 150. The acceleration sensor may detect a user's movement based on vibration and the like. The acceleration sensor may measure not only dynamic acceleration but also static acceleration with respect to the gravitational force. The acceleration sensor may measure static acceleration by detecting the degree to which an axis of the acceleration sensor is tilted with respect to the ground when placed in parallel with the surface of the ground, i.e., perpendicularly to the direction of the gravitational force. The tilt of the acceleration sensor may be calculated as the sine value of a gravitational acceleration value of each axis of the acceleration sensor with respect to the surface of the ground when the acceleration sensor stands still.

The geomagnetic sensor may detect a geomagnetic signal from a particular operation. Terrestrial magnetism refers to the Earth's magnetic field, which varies periodically or irregularly. To determine the Earth's magnetic field at a particular location on the Earth, three independent elements, i.e., a horizontal component, an azimuth angle, and a dip angle, need to be determined. To detect the Earth's magnetic field, x-, y-, and z-axis sensors may be used. The x- and y-axis sensors may detect a left-right direction and a forward-backward direction, respectively. The z-axis sensor may detect a vertical direction.

The motion sensor 150 may detect any movement of the first terminal 100. In response to a movement of the first terminal 100 being detected, the motion sensor 150 may transmit information on the detected movement to the control unit 170. For example, the term 'movement of the first terminal 100' includes a tilt of the first terminal 100, a shake of the first terminal 100, a tap on the first terminal 100, and the like.

The key input unit 160 may be implemented as a keypad, a touch screen or a touchpad. The key input unit 160 may transmit an input signal, which is received from the user, to the control unit 170 to control the operation of the first terminal 100. For example, the key input unit 160 may receive a command to set the first terminal 100 in a Bluetooth standby mode from the user in response to the user's manipulation of the key input unit 160 (for example, pressing a Bluetooth button on the key input unit 160).

The first terminal 100 may be placed in the Bluetooth standby mode in various manners other than that set forth herein. In a case in which the motion sensor 150, the voice input unit 123, and the voice output unit 125 are all activated during a standby mode of the first terminal 100, which is an operating mode in which the display unit 130 is activated but there is no input to the display unit 130, the first terminal 100 may be placed in the Bluetooth standby mode without the need to be additionally manipulated by the user. For example, in a case in which the first terminal 100 is placed on a desk with the motion sensor 150, the voice input unit 123, and the voice output unit 125 activated, the first terminal 100 may be automatically placed in the Bluetooth standby mode.

The control unit 170 may control the general operation of the first terminal 100. For example, the control unit 170 may set the first terminal 100 in the Bluetooth standby mode in response to the receipt of a command from the user via the key input unit 160.

The Bluetooth standby mode may be a standby mode for performing Bluetooth communication. During the Bluetooth standby mode, the voice input unit 123, the voice output unit 125, the motion sensor 150, and the Bluetooth communication unit 110 may all be activated. That is, during the Bluetooth standby mode, the first terminal 100 may sense the input and output of voice data, sense any movement or motion, and may be prepared for performing Bluetooth communication. In response to a predetermined movement of the user being detected during the Bluetooth standby mode, the first terminal 100 may perform Bluetooth pairing and the transmission of data. For example, in response to the detection of the predetermined movement from the user, the control unit 170 may determine whether the first terminal 100 and the second terminal 200 are paired with each other. In response to the first terminal 100 and the second terminal 200 being yet to be paired, the control unit 170 may pair the first terminal 100 with the second terminal 200.

The pairing of the first terminal 100 and the second terminal 200 may be performed in various manners. For example, the pairing of the first terminal 100 and the second terminal 200 may be performed using a DTMF signal.

More specifically, the control unit 170 may convert the BD address of the first terminal 100 into a DTMF signal, and may control the DTMF signal to be output via the voice output unit 125.

In response to the output of the DTMF signal, one or more terminals that are located in the vicinity of the first terminal 100 may be exposed to the DTMF signal. Since the DTMF signal is an audio signal, any neighboring terminal in the Bluetooth standby mode, i.e., any neighboring terminal with its voice input unit activated, may receive the DTMF signal.

For example, assume that the second terminal 200 is in the Bluetooth standby mode. In a case in which the second terminal 200 is placed in the Bluetooth standby mode, the second terminal 200 may receive the DTMF signal, which is output from the first terminal 100. In response to the receipt of a DTMF signal requesting a Bluetooth connection from the second terminal 200 via the voice input unit 123, the control unit 170 may pair the first terminal 100 with the second terminal 200.

In short, the control unit 170 may Bluetooth-pair the first terminal 100 with the second terminal 200 by using a DTMF signal. However, there is no restriction to the type of method to perform Bluetooth pairing. That is, Bluetooth pairing may be performed in various manners other than using a DTMF signal.

In response to the first terminal 100 being paired with the second terminal 200, the control unit 170 may transmit data to the second terminal 200 via the Bluetooth communication unit 110. For example, the term 'data' includes a multimedia file such as a text file, an image file, a video file, a music file, or the like.

In response to a movement of the first terminal 100 being detected during the Bluetooth standby mode, the control unit 170 may perform pairing the first terminal 100 with the second terminal 200, which is also in the Bluetooth standby mode, and transmitting multimedia data to the second terminal 200 at the same time.

That is, in response to the detection of a movement of the first terminal 100 during the Bluetooth standby mode, the control unit 170 may control the first terminal 100 to serve as a Bluetooth transmitter and thus to transmit data. Therefore, the user may easily transmit data between the first terminal 100 and the second terminal 200 via Bluetooth communications.

Referring to FIG. 1, the second terminal 200 includes a Bluetooth communication unit 210, an audio processing unit 220, a voice input unit 223, a voice output unit 225, a display unit 230, a storage unit 240, a motion sensor 250, a key input unit 260, and a control unit 270.

The second terminal 200 has almost the same structure as the first terminal 100, and thus, the structure and operation of the second terminal 200 will hereinafter be described, focusing mainly on differences with the first terminal 100. That is, since the first terminal 100 transmits data and the second terminal 200 receives data, there may be slight differences in functions between the first terminal 100 and the second terminal 200.

The control unit 270 may set the second terminal 200 in the Bluetooth standby mode.

The voice input unit 225 may receive a DTMF signal including the BD address of the first terminal 100 from the first terminal 100. The control unit 270 may identify the BD address of the first terminal from the received DTMF signal, and may generate a DTMF signal requesting Bluetooth pairing. The control unit 270 may output the generated DTMF signal via the audio output unit 223.

In response to the Bluetooth pairing of the first terminal 100 and the second terminal 200 being complete, the control unit 270 may receive multimedia data from the first terminal 100 via the Bluetooth communication unit 210. The control unit 270 may control the display unit 230 to display the received multimedia data on a screen of the display unit 230. Accordingly, the user may easily identify a file received by the second terminal 200.

By allowing the user to transmit data from the first terminal 100 to the second terminal 200 via Bluetooth simply by moving the first terminal 100, it is possible to facilitate the transmission of data via Bluetooth. In addition, by setting a terminal from which a movement is detected as a transmitting terminal and a terminal from which no movement is detected as a receiving terminal, it is possible to further facilitate the transmission of data via Bluetooth.

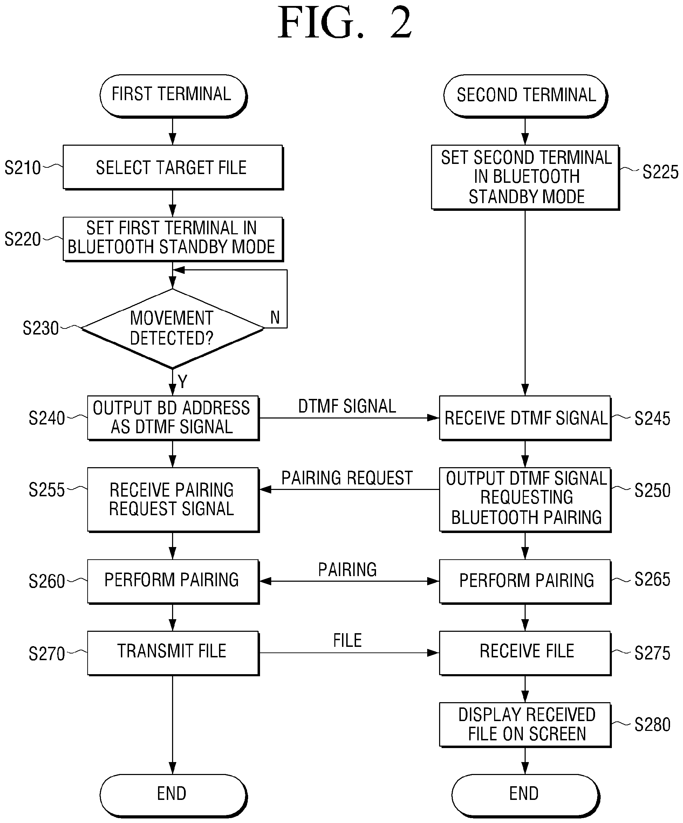

A Bluetooth communication method for transmitting data between the first terminal 100 and the second terminal 200 will hereinafter be described with reference to FIG. 2. FIG. 2 is a flowchart illustrating a Bluetooth communication method for transmitting data between the first terminal 100 and the second terminal 200, according to an embodiment of the present invention.

Referring to FIG. 2, the first terminal 100 may select a target file to be transmitted in accordance with the user's selection (S210). In response to the receipt of a command from the user, the first terminal 100 may be set in the Bluetooth standby mode (S220). For example, in response to the user pressing a button for switching to the Bluetooth standby mode, the first terminal 100 may be placed in the Bluetooth standby mode.

In response to the receipt of a command from the user, the second terminal 200 may be set in the Bluetooth standby mode (S225). When the first terminal 100 and the second terminal 200 are both placed in the Bluetooth standby mode, they may communicate with each other via Bluetooth.

A determination may be made as to whether there is any movement detected from the first terminal 100 (S230). In a case in which it is determined that there is a movement detected from the first terminal 100 (S230-Y), the first terminal 100 may convert its BD address into a DTMF signal, and may output the DTMF signal (S240).

The second terminal 200 may receive the DTMF signal (S245), and may determine the BD address of the first terminal 100 based on the received DTMF signal. The second terminal 200 may generate a DTMF signal requesting Bluetooth pairing based on the BD address of the first terminal 100, and may output the generated DTMF signal (S250).

The first terminal 100 may receive the DTMF signal generated by the second terminal 200 (S255). The first terminal 100 and the second terminal 200 may be paired with each other (S260 and S265).

The first terminal 100 may transmit the target file to the second terminal via a Bluetooth communication (S270). The second terminal 200 may receive the target file from the first terminal 100 (S275), and may display the received file on a screen thereof (S280).

In this manner, the first terminal 100 may transmit data to the second terminal 200 via a Bluetooth communication. Since the first terminal 100 is configured to serve as a Bluetooth transmitter in response to the detection of a movement during the Bluetooth standby mode, the user may easily transmit a file from the first terminal 100 to the second terminal 200 simply by moving the first terminal 100.

In the example illustrated in FIG. 2, the first terminal 100 and the second terminal 200 are yet to be paired. However, the example illustrated in FIG. 2 may also be applied to a case in which the first terminal 100 and the second terminal 200 are already paired with each other. The method of FIG. 2 excluding S240 to S265 may be performed when the first terminal 100 and the second terminal 200 are already paired with each other.

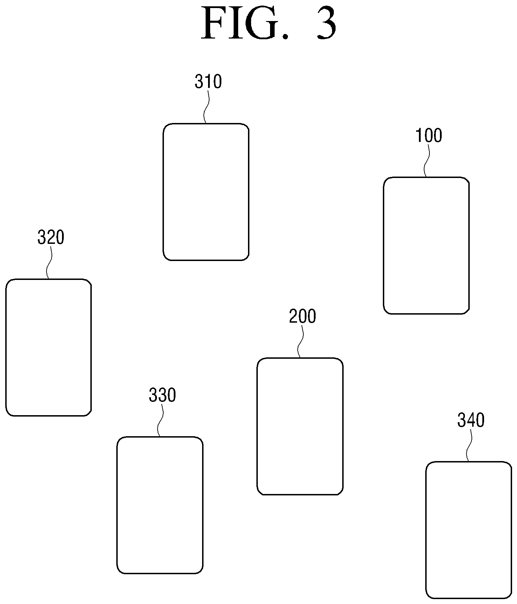

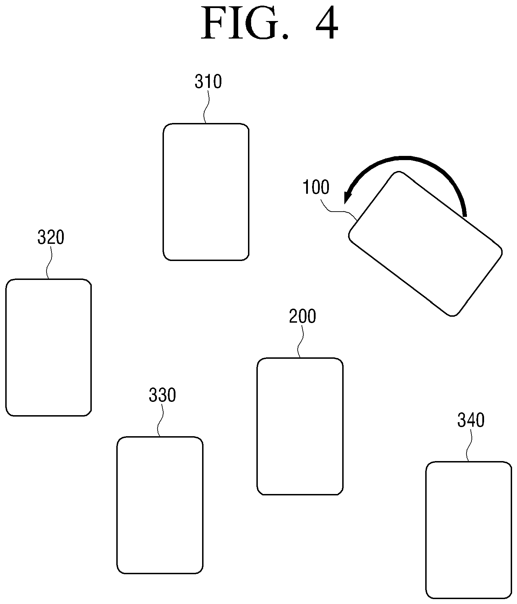

The transmission of a file via a Bluetooth communication will hereinafter be described with reference to FIGS. 3 to 7. FIGS. 3 to 7 are diagrams illustrating an example of transmitting a file via a Bluetooth communication using a movement of the first terminal 100.

FIG. 3 illustrates an example of the arrangement of a plurality of terminals including the first terminal 100 and the second terminal 200. Referring to FIG. 3, the first terminal 100 and the second terminal 200 may be in the Bluetooth standby mode, and terminals 310, 320, 330, and 340 may be in a regular mode.

In this case, the first terminal 100 and the second terminal 200 may be subject to a Bluetooth communication.

Therefore, in response to the detection of a movement of the first terminal 100, the first terminal 100 may serve as a Bluetooth transmitter, and the second terminal 200 may serve as a Bluetooth receiver.

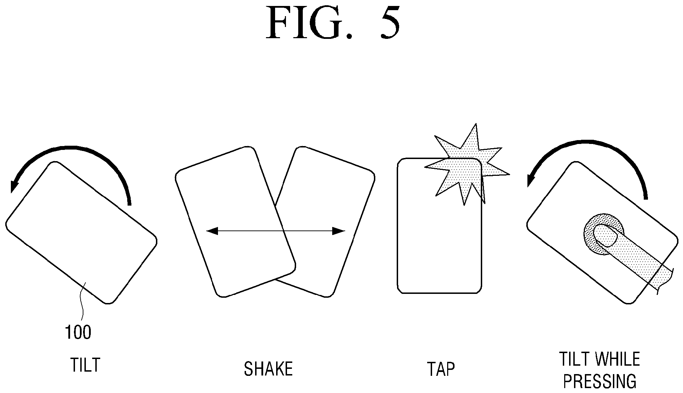

FIG. 5 illustrates examples of the movement of the first terminal 100. Referring to FIG. 5, a movement may be entered to the first terminal 100 by tilting the first terminal 100, shaking the first terminal 100, tapping on the first terminal 100, or tilting the first terminal 1000 while pressing on the first terminal 100.

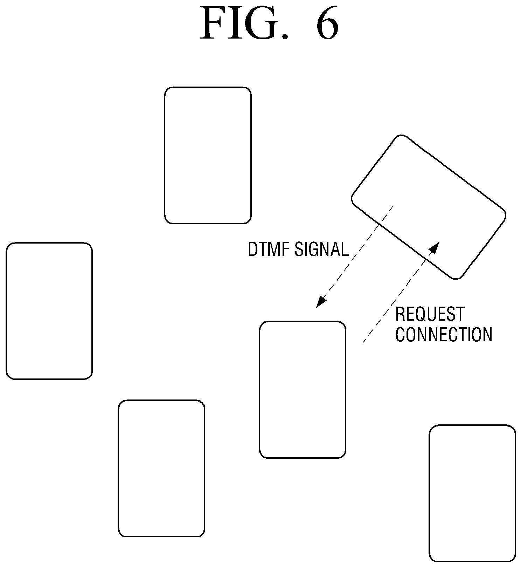

Referring to FIG. 6, in response to a movement being entered to the first terminal 100, the first terminal 100 may convert its BD address into a DTMF signal, and may output the DTMF signal. The second terminal 200 may receive the DTMF signal, and may identify the BD address of the first terminal 100 from the DTMF signal. The second terminal 200 may output a Bluetooth pairing request signal to the first terminal 100. As a result, the first terminal 100 and the second terminal 200 may be Bluetooth-paired with each other.

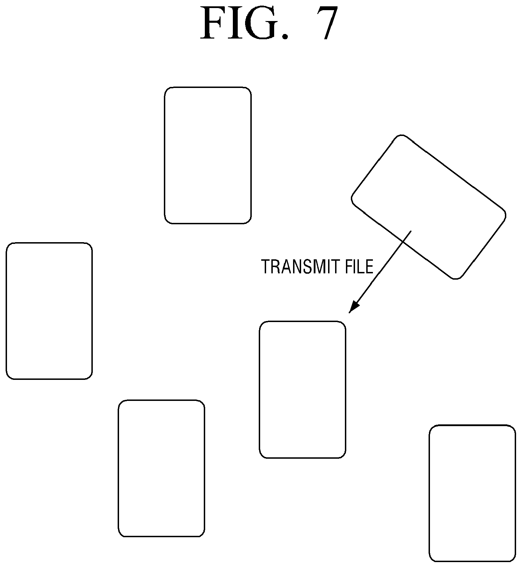

Thereafter, referring to FIG. 7, the first terminal 100 may transmit a file to the second terminal 200 via a Bluetooth communication.

In this manner, it is possible to easily transmit a file from the first terminal 100 to the second terminal by setting the first terminal 100 in the Bluetooth standby mode and entering a movement to the first terminal 100.

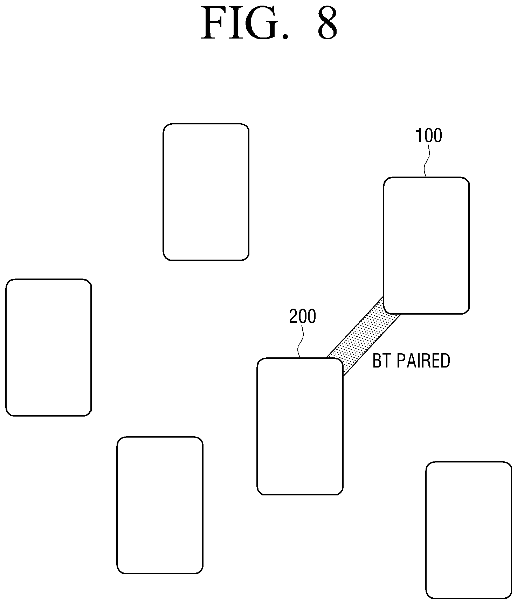

A Bluetooth communication method in a case in which the first terminal 100 and the second terminal 200 are already paired with each other will hereinafter be described with reference to FIGS. 8 to 10. FIGS. 8 to 10 are diagrams illustrating an example of how the first terminal 100 and the second terminal 200 communicate with each other via Bluetooth in a case in which the first terminal 100 and the second terminal 200 are already paired with each other.

Referring to FIG. 8, the first terminal 100 and the second terminal 200 may be already paired with each other.

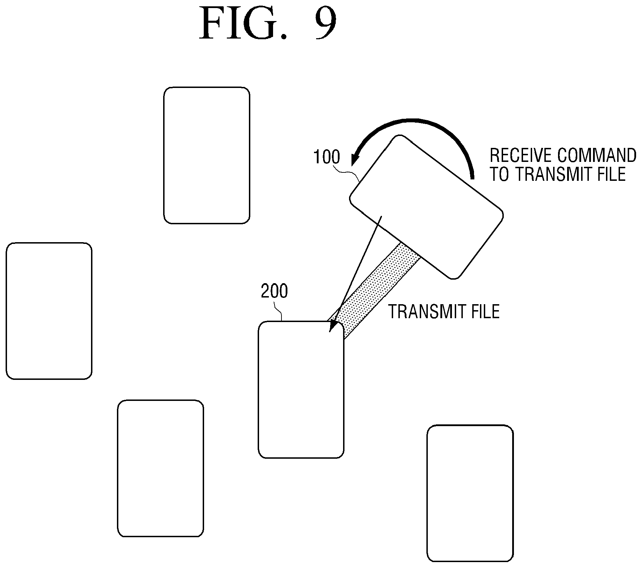

In this case, referring to FIG. 9, in response to a movement being entered to the first terminal 100, the first terminal 100 may serve as a Bluetooth transmitter, and the second terminal 200 may serve as a Bluetooth receiver. Accordingly, the first terminal 100 may transmit a file to the second terminal 200 via Bluetooth.

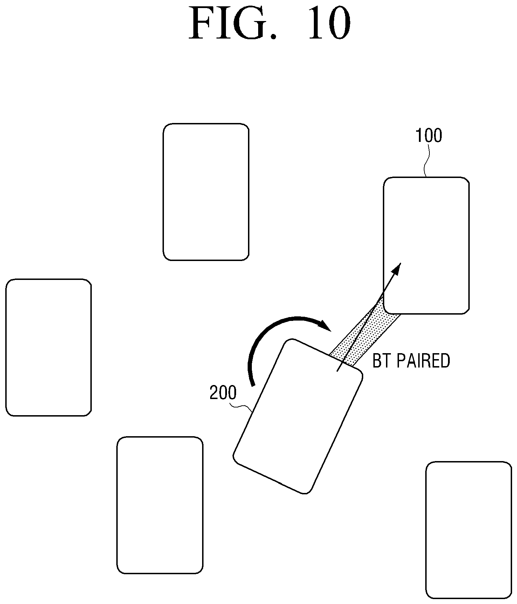

Referring to FIG. 10, in response to a movement being entered to the second terminal 200, the second terminal 200 may serve as a Bluetooth transmitter, and the first terminal 100 may serve as a Bluetooth receiver. Accordingly, the second terminal 200 may transmit a file to the first terminal 100 via Bluetooth.

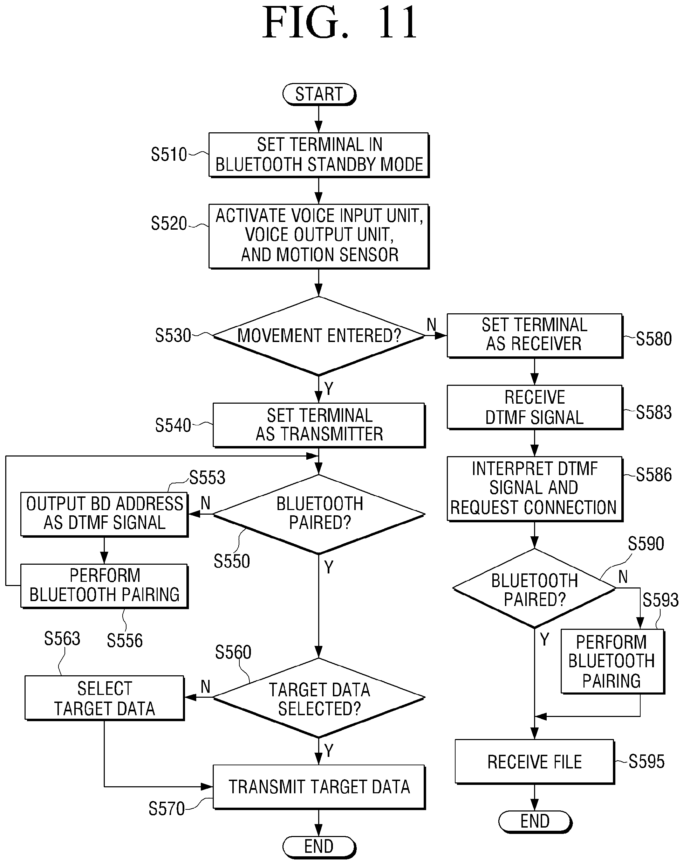

The operation of the first terminal 100 will hereinafter be described with reference to FIG. 11. FIG. 11 is a flowchart illustrating a Bluetooth communication method of the first terminal 100, according to an embodiment of the present invention.

Referring to FIG. 11, the first terminal 100 may be set in the Bluetooth standby mode (S510). The voice input unit 123, the voice output unit 125, and the motion sensor 150 of the first terminal 100 may be activated (S520).

The first terminal 100 may determine whether there is a movement entered thereto (S530). In response to a movement being entered to the first terminal 100 (S530-Y), the first terminal 100 may be set as a transmitting terminal (S540). Accordingly, the first terminal 100 may serve as a Bluetooth transmitter.

The first terminal 100 may determine whether it is Bluetooth-paired with the second terminal 200 (S550). If the first terminal 100 and the second terminal 200 are yet to be paired (S550-N), the BD address of the first terminal 100 may be converted into a DTMF signal, and the DTMF signal may be output (S553). The first terminal 100 may be Bluetooth-paired with the second terminal 200 (S556).

In a case in which the first terminal 100 is already Bluetooth-paired with the second terminal 200 (S550-Y), the first terminal 100 may determine whether there is data designated to be transmitted (S560). In a case in which there is no data designated to be transmitted (S560-N), the first terminal 100 may designate data to be transmitted in accordance with the user's selection (S563). The first terminal 100 may transmit the designated data to the second terminal 200 (S570).

In a case in which no movement being entered to the first terminal 100 (S530-N), the first terminal 100 may be set as a receiving terminal (S580). Accordingly, the first terminal 100 may serve as a Bluetooth receiver.

In response to the receipt of a DTMF signal from the second terminal 200 (S583), the first terminal 100 may interpret the received DTMF signal, and may extract the BD address of the second terminal 200 from the received DTMF signal. The first terminal 100 may issue a request for a Bluetooth connection to the second terminal 200 (S586).

The first terminal 100 may determine whether it is Bluetooth-paired with the second terminal 200 (S590). In a case in which the first terminal 100 and the second terminal 200 are yet to be Bluetooth-paired (S590-N), the first terminal 100 may be Bluetooth-paired with the second terminal 200 (S593). The first terminal 100 may receive a file from the second terminal 200 (S595).

In short, a determination may be made as to whether the first terminal 100 should serve as a Bluetooth transmitter or a Bluetooth receiver based on whether a movement has been entered to the first terminal 100. The user may easily transmit data between the first terminal 100 and the second terminal 200 via Bluetooth.

In a case in which the first terminal 100 is paired with the second terminal 200 (S550-Y), the first terminal 100 may display on its screen information indicating that it is paired with the second terminal 200. Accordingly, the user may easily identify what terminal the first terminal 100 is currently being paired with.

The first terminal 100 may be configured to output a DTMF signal even when paired with the second terminal 200. In this example, the first terminal 100 may identify the BD address of the second terminal 200 from the DTMF signal, and may thus prevent any error in the setting of a Bluetooth connection to the second terminal 200.

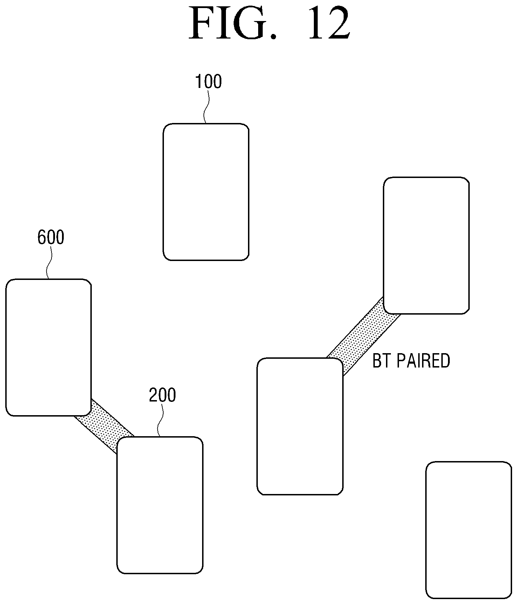

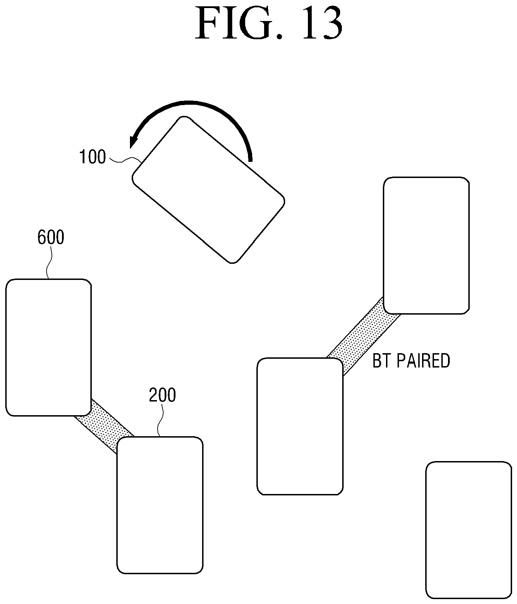

The first terminal 100 may transmit data to the second terminal 200 only in a case in which the second terminal 200 is not paired with other terminals, and this will hereinafter be described with reference to FIGS. 12 and 13. FIGS. 12 and 13 are diagrams illustrating a case in which the second terminal 200 is paired with a third terminal 600.

Referring to FIG. 12, the second terminal 200 is paired with the third terminal 600. Therefore, referring to FIG. 13, even in a case in which the first terminal 100 outputs a DTMF signal in response to a movement being entered thereto, the second terminal 200 may not respond to the DTMF signal regardless of whether the second terminal 200 is in the Bluetooth standby mode.

Accordingly, the first terminal 100 may not set a Bluetooth connection to the second terminal 200 in a case in which the second terminal 200 is Bluetooth-paired with another terminal.

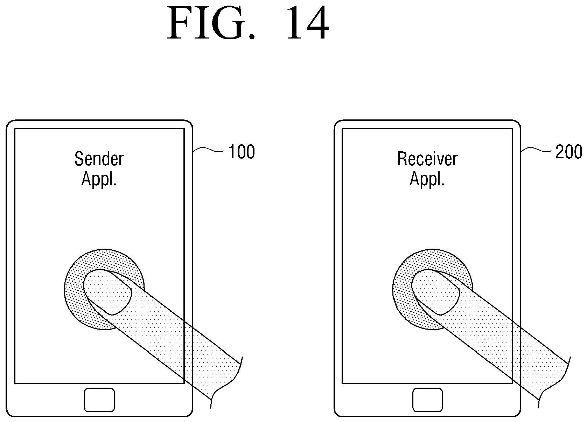

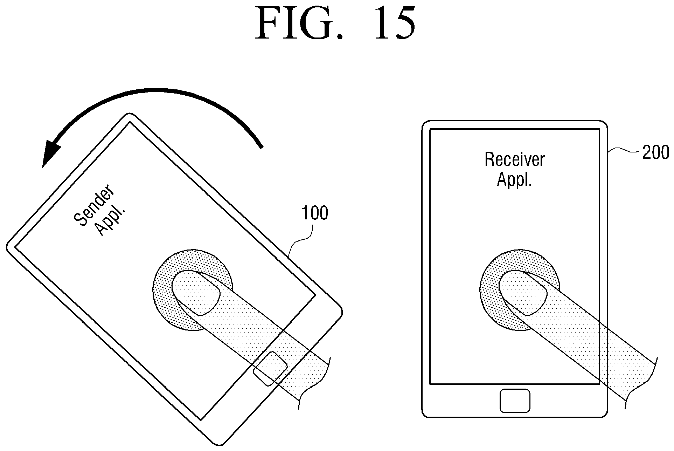

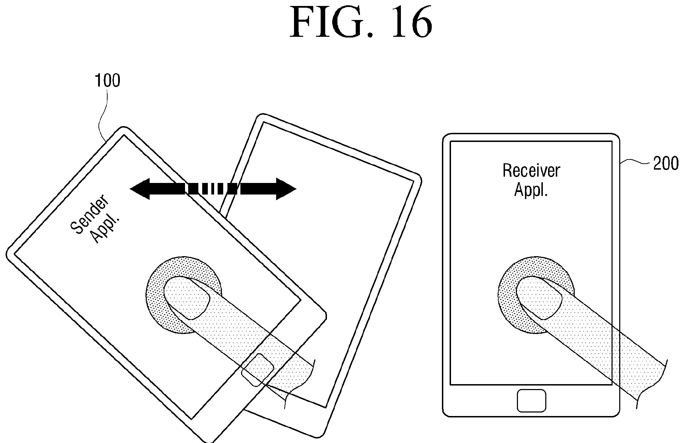

A method to execute the Bluetooth standby mode and a method to transmit a file will hereinafter be described with reference to FIGS. 14 to 17. FIG. 14 is a diagram illustrating an example of a method to execute the Bluetooth standby mode, and FIGS. 15 to 17 are diagrams illustrating examples of a movement for executing the transmission of a file.

Referring to FIG. 14, the user may execute the Bluetooth standby mode by long-touching the screens of the first terminal 100 and the second terminal 200.

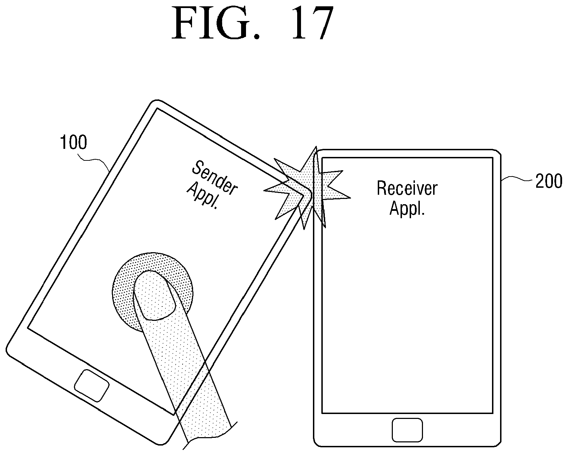

Referring to FIG. 15, the user may transmit a file from the first terminal 100 to the second terminal 200 by tilting the first terminal 100. Referring to FIG. 15, the user may also transmit a file from the first terminal 100 to the second terminal 200 by shaking the first terminal 100. Referring to FIG. 17, the user may also transmit a file from the first terminal 100 to the second terminal 200 by hitting the second terminal 200 with the first terminal 100.

The user may execute the Bluetooth standby mode and may execute the transmission of a file in various manners other than those set forth herein.

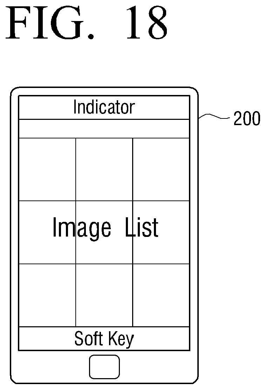

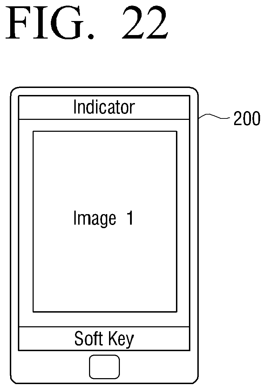

The provision of a direct view function after the receipt of a file by the second terminal 200 will hereinafter be described with reference to FIGS. 18 to 22.

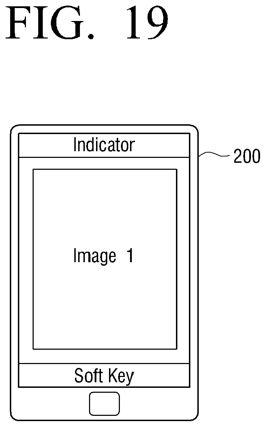

FIGS. 18 and 19 are diagrams illustrating an example of executing a direct view function for an image file received by the second terminal 200. Referring to FIGS. 18 and 19, in response to the receipt of an image file with an image list screen displayed on the second terminal 200, the second terminal 200 may readily display the received image file on its screen. That is, in a case in which an application currently being executed by the second terminal 200 is an application capable of executing the received image file, the received image file may be readily executed by the current application, and may thus be readily displayed on the screen of the second terminal 200.

In this manner, since the received image file is readily displayed on the screen of the second terminal 200, it is possible for the user to readily identify the corresponding image file without a requirement of additional manipulation of the second terminal 200.

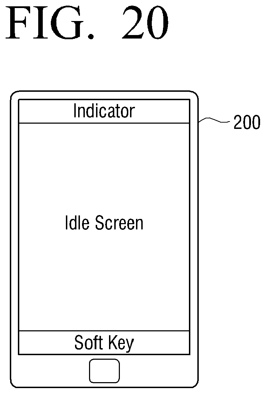

An example of displaying a message confirming the completion of the execution of a direct view function will hereinafter be described with reference to FIGS. 20 to 22. FIGS. 20 to 22 are diagrams illustrating an example of displaying a message confirming the completion of the execution of a direct view function.

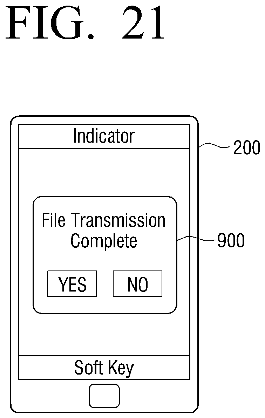

Referring to FIGS. 20 and 21, in response to the receipt of an image file by the second terminal 200 with an idle screen displayed on the screen of the second terminal 200, a message 900 that confirms the completion of the execution of a direct view function may be displayed on the screen of the second terminal 200. In response to the user selecting "Yes" from the message 900, the second terminal 200 may display the received image file on its screen.

In this manner, the user may be allowed to choose whether to use a direct view function in connection with a received image file by using the message 900.

The first terminal 100 and the second terminal 200 may be Bluetooth-paired using a voice signal. An example of Bluetooth-pairing the first terminal 100 and the second terminal 200 by using a voice signal will hereinafter be described.

The voice output unit 123 of the first terminal 100 may output a voice signal in response to the detection of a movement during the Bluetooth standby mode.

The control unit 170 of the first terminal 100 may set the first terminal 100 in the Bluetooth standby mode. In response to the detection of a movement during the Bluetooth standby mode, the control unit 170 may select the second terminal 200 as a target terminal for the first terminal to Bluetooth-communicate with by using a voice signal. The control unit 170 may control the first terminal to be Bluetooth-paired with the selected target terminal, i.e., the second terminal 200. The control unit 170 may control data to be transmitted to the second terminal 200 via a Bluetooth communication.

For example, the control unit 170 may control the time of the transmission of a voice signal to the second terminal 200 to be stored in the storage unit 140, and may receive the time of the receipt of the voice signal by the second terminal 200. In this example, if the transmission time of the voice signal coincides with the receipt time of the voice signal, the control unit 170 may select the second terminal 200 as a target terminal for the first terminal to Bluetooth-communicate with.

In another example, the control unit 170 of the first terminal 100 may control first information on the voice signal to be stored in the storage unit 140, and may receive second information on the voice signal from the second terminal 200. In this example, if the first information coincides with the second information, the control unit 170 may select the second terminal 200 as a target terminal for the first terminal to Bluetooth-communicate with. The first information and the second information may represent various properties that identify the voice signal. For example, the first information and the second information may include frequency information, pattern information, and tone information of the voice signal.

The voice input unit 225 of the second terminal 200 may receive a voice signal transmitted by the first terminal 100.

In response to the receipt of a voice signal from the first terminal 100, the control unit 270 of the second terminal 200 may Bluetooth-pair the second terminal 200 with the first terminal 100 using the received voice signal, and may control a file to be received from the first terminal via a Bluetooth communication.

For example, in response to the receipt of a voice signal from the first terminal 100, the control unit 270 may control the time of the receipt of the voice signal to be stored in the storage unit 240, and to be transmitted to the first terminal 100. The control unit 270 may control the second terminal 200 to be Bluetooth-paired with the first terminal based on the time of the receipt of the voice signal. That is, if the time of the voice signal by the first terminal 100 coincides with the time of the receipt of the voice signal by the second terminal 200, the first terminal 100 may transmit a pairing request to the second terminal 200. In response to the receipt of the pairing request from the first terminal 100, the control unit 270 may control the second terminal 200 to be Bluetooth-paired with the first terminal 100.

In another example, in response to the receipt of a voice signal from the first terminal, the control unit 270 may analyze the voice signal, and may control information on the voice signal, which is obtained by analyzing the voice signal, to be stored in the storage unit 240. The information on the voice signal may represent one or more properties that identify the voice signal. For example, the information on the voice signal may include frequency information, pattern information, and tone information of the voice signal. That is, the control unit 270 may analyze the frequency, pattern and tone of the voice signal, and may store the results of the analysis in the storage unit 240.

The control unit 270 may control the voice signal information present in the storage unit 240 to be transmitted to the first terminal 100, and may control the second terminal 200 to be Bluetooth-paired with the first terminal based on the corresponding voice signal information. That is, if first information on the voice signal, which is provided by the first terminal 100, coincides with second information on the voice signal, which is provided by the second terminal 200, the first terminal 100 may transmit a pairing request to the second terminal 200. In response to the receipt of the pairing request from the first terminal 100, the control unit 270 may control the second terminal 200 to be Bluetooth-paired with the first terminal 100.

In this manner, the first terminal 100 and the second terminal 200 may be Bluetooth-paired with each other by using a voice signal.

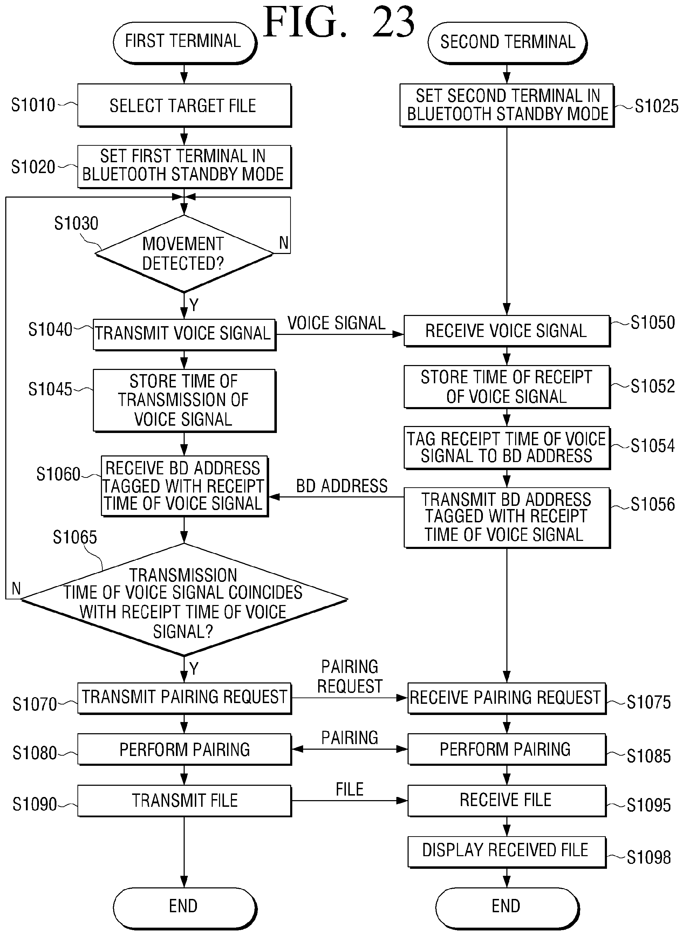

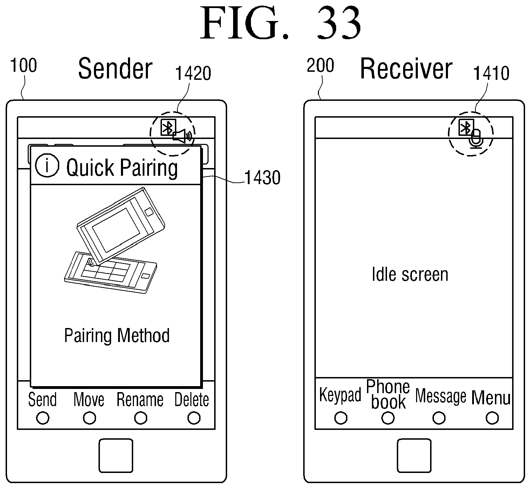

Examples of Bluetooth-pairing the first terminal 100 and the second terminal 200 will hereinafter be described with reference to FIGS. 23 to 37. FIG. 23 is a flowchart illustrating a Bluetooth communication method according to an embodiment of the present invention, in which Bluetooth pairing is performed using the times of the transmission and receipt of a voice signal.

Referring to FIG. 23, the first terminal 100 may select a target file to be transmitted in accordance with the user's selection (S1010). In response to the receipt of a command from the user, the first terminal 100 may be set in the Bluetooth standby mode (S1020). For example, in response to the user pressing a button for switching to the Bluetooth standby mode, the first terminal 100 may be placed in the Bluetooth standby mode.

In response to the receipt of a command from the user, the second terminal 200 may be set in the Bluetooth standby mode (S1025). The first terminal 100 and the second terminal 200 may Bluetooth-communicate with each other when placed in the Bluetooth standby mode.

The first terminal 100 may determine whether there is a movement detected (S1030). In response to the detection of a movement (S1030-Y), the first terminal 100 may transmit a voice signal (S1040), and may store a time of the transmission of the voice signal (S1045).

The second terminal 200 may receive the voice signal (S1050), and may store a time of the receipt of the voice signal (S1052). The second terminal 200 may tag the receipt time of the voice signal to a BD address (S1054), and may transmit the BD address to the first terminal 100 (S1056). That is, the second terminal 200 may transmit the receipt time of the voice signal to the first terminal 100 by tagging the receipt time of the voice signal to a BD address.

The first terminal 100 may receive the BD address tagged with the receipt time of the voice signal from the second terminal 200 (S1060). That is, the first terminal 100 may receive the receipt time of the voice signal from the second terminal 200 by receiving the BD address tagged with the receipt time of the voice signal.

The first terminal 100 may determine whether the transmission time of the voice signal coincides with the receipt time of the voice signal (S1065). In response to the transmission time of the voice signal not coinciding with the receipt time of the voice signal (S1065-N), the first terminal 100 may perform S1030 again.

In response to the transmission time of the voice signal coinciding with the receipt time of the voice signal (S1065-Y), the first terminal 100 may transmit a pairing request to the second terminal 200 (S1070). The second terminal 200 may receive the pairing request from the first terminal 100 (S1075). The first terminal 100 and the second terminal 200 may be paired with each other (S1080 and S1085).

The first terminal 100 may transmit the target file to the second terminal 200 via a Bluetooth communication (S1090). The second terminal 200 may receive the target file from the first terminal 100 (S1095), and may display the target file on its screen (S1098).

In this manner, by using a voice signal, it is possible to Bluetooth-pair the first terminal 100 and the second terminal 200 and to transmit data between the first terminal 100 and the second terminal 200 via a Bluetooth communication.

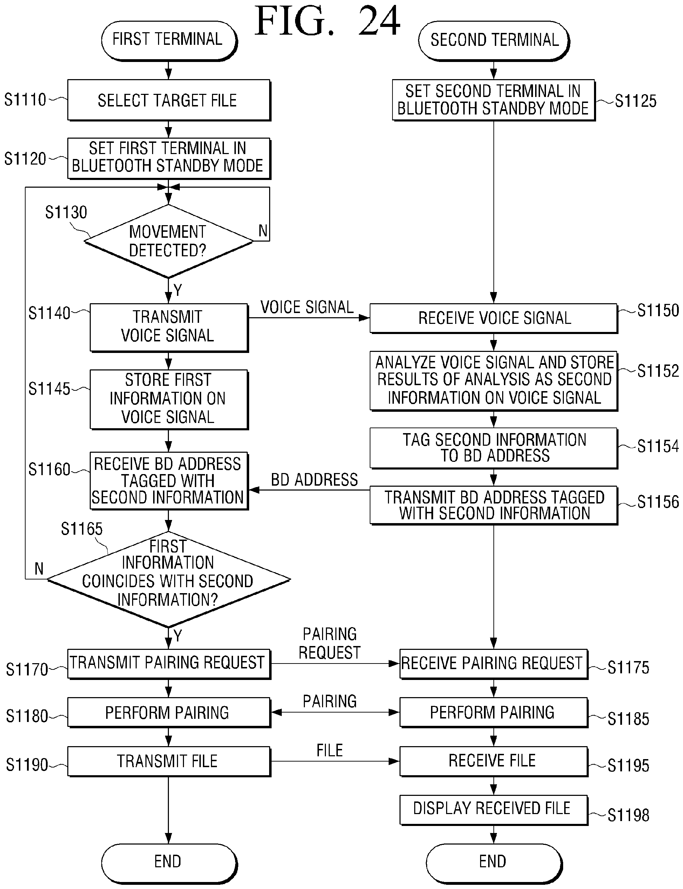

FIG. 24 is a flowchart illustrating a Bluetooth communication method according to another embodiment of the present invention, in which Bluetooth-pairing is performed using information on a voice signal. Referring to FIG. 24, the first terminal 100 may select a target file to be transmitted in accordance with the user's selection (S1110). In response to the receipt of a command from the user, the first terminal 100 may be set in the Bluetooth standby mode (S1120). For example, in response to the user pressing a button for switching to the Bluetooth standby mode, the first terminal 100 may be placed in the Bluetooth standby mode.

In response to the receipt of a command from the user, the second terminal 200 may be set in the Bluetooth standby mode (S1125). The first terminal 100 and the second terminal 200 may Bluetooth-communicate with each other when placed in the Bluetooth standby mode.

The first terminal 100 may determine whether there is a movement detected (S1130). In response to the detection of a movement (S1130-Y), the first terminal 100 may transmit a voice signal (S1140), and may store first information on the voice signal (S1145). The first information may represent one or more properties that identify the voice signal. For example, the first information may include frequency information, pattern information, and tone information of the voice signal.

The second terminal 200 may receive the voice signal (S1150), and may store second information on the voice signal (S1152). The second information may represent one or more properties that identify the voice signal. For example, the second information may include frequency information, pattern information, and tone information of the voice signal. The second terminal 200 may analyze the frequency, pattern, and tone of the voice signal, and may store the results of the analysis.

The second terminal 200 may tag the second information to a BD address (S1154), and may transmit the BD address to the first terminal 100 (S1156). That is, the second terminal 200 may transmit the second information to the first terminal 100 by tagging the second information to a BD address.

The first terminal 100 may receive the BD address tagged with the second information from the second terminal 200 (S1160). That is, the first terminal 100 may receive the second information from the second terminal 200 by receiving the BD address tagged with the second information.

The first terminal 100 may determine whether the first information coincides with the second information (S1165). In response to the first information not coinciding with the second information (S1165-N), the first terminal 100 may perform S1130 again.

In response to the first information coinciding with the second information (S1165-Y), the first terminal 100 may transmit a pairing request to the second terminal 200 (S1170). The second terminal 200 may receive the pairing request from the first terminal 100 (S1175). The first terminal 100 and the second terminal 200 may be paired with each other (S1180 and S1185).

The first terminal 100 may transmit the target file to the second terminal 200 via a Bluetooth communication (S1190). The second terminal 200 may receive the target file from the first terminal 100 (S1195), and may display the target file on its screen (S1198).

In this manner, by using a voice signal, it is possible to Bluetooth-pair the first terminal 100 and the second terminal 200 and to transmit data between the first terminal 100 and the second terminal 200 via a Bluetooth communication.

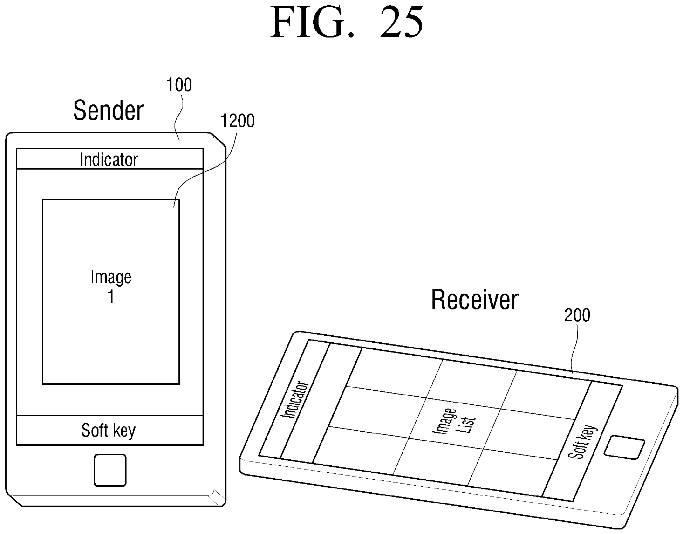

FIGS. 25 to 27 are diagrams illustrating an example of performing Bluetooth pairing and the transmission of a file by using a voice signal.

Referring to FIG. 25, image 1 (1200) is displayed on the screen of the first terminal 100. That is, image 1 (1200) is selected by the first terminal 100 as a target file to be transmitted.

The second terminal 200 is laid down. When laid down, the second terminal 200 may be in a standby state for receiving a file via a Bluetooth communication.

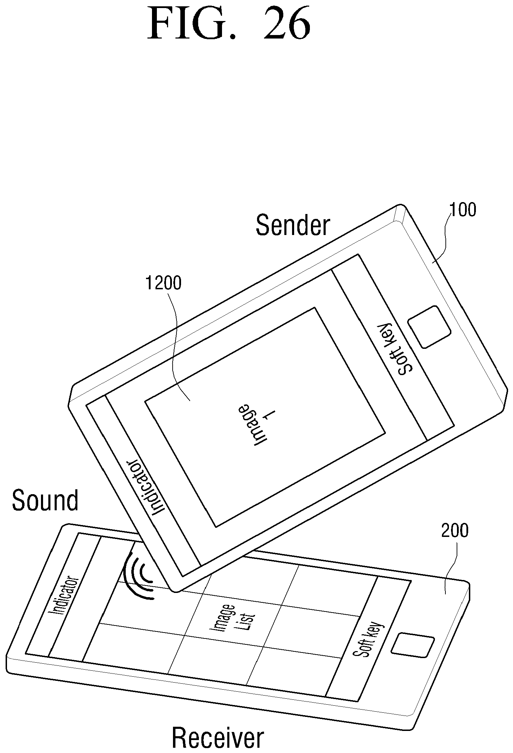

FIG. 26 illustrates an example of Bluetooth-pairing the first terminal 100 and the second terminal 200 by using a voice signal. Referring to FIG. 26, the first terminal 100 is tilted toward the screen of the second terminal 200. In response to the detection of such movement as a tilt, the first terminal 100 may transmit a voice signal to the second terminal 200. The second terminal 200 may receive the voice signal, and may be Bluetooth-paired with the first terminal 100.

In response to the Bluetooth pairing of the first terminal 100 and the second terminal 200, the first terminal 100 may transmit image 1 (1200) to the second terminal 200 via a Bluetooth communication.

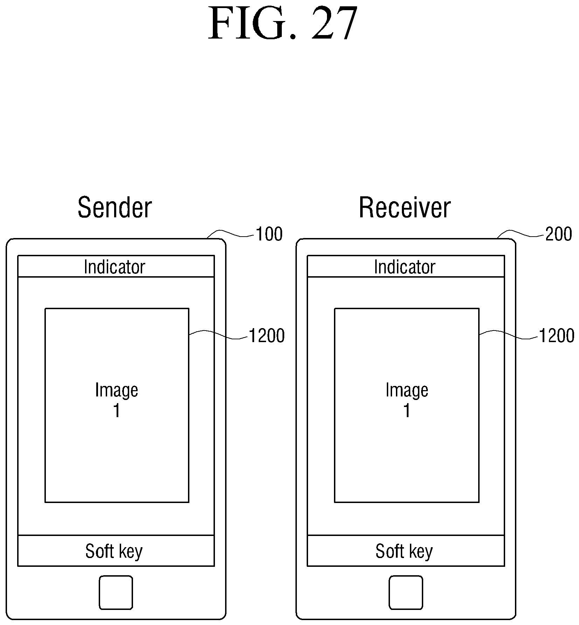

FIG. 27 illustrates a case in which the transmission of image 1 (1200) from the first terminal 100 to the second terminal 200 is complete. Referring to FIG. 27, in response to the receipt of image 1 (1200), the second terminal 200 may display image 1 (1200) on its screen.

In this manner, by using a voice signal, it is possible to Bluetooth-pair the first terminal 100 and the second terminal 200 and transmit a file between the first terminal 100 and the second terminal 200.

In addition, simply by tilting the first terminal 100, it is possible to Bluetooth-pair the first terminal 100 and the second terminal 200 and transmit a file from the first terminal 100 to the second terminal 200. Therefore, the user may intuitively transmit a file from the first terminal 100 to the second terminal 200 by mimicking the gesture of pouring water into the second terminal 200 with the first terminal 100.

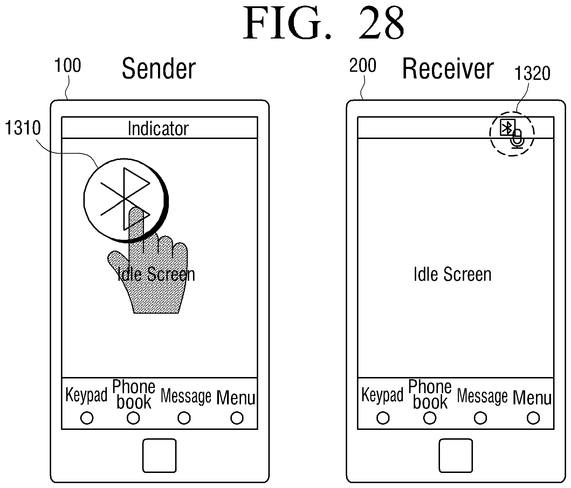

FIGS. 28 to 31 are diagrams illustrating an example of Bluetooth-pairing the first terminal 100 and the second terminal 200 by using a voice signal during the Bluetooth standby mode.

FIG. 28 illustrates a case in which the user selects a Bluetooth icon 1310 on the screen of the first terminal 100. Referring to FIG. 28, an icon 1320 indicating that the second terminal 200 is in the Bluetooth standby mode may be displayed at the top of the screen of the second terminal 200.

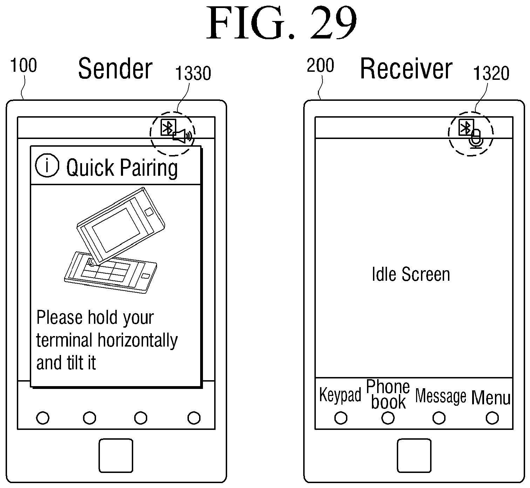

In response to the selection of the Bluetooth icon 1310 by the user, a Bluetooth pairing guide message may be displayed on the screen of the first terminal 100, and a Bluetooth standby mode display icon 1330 may be displayed at the top of the screen of the first terminal 100, as shown in FIG. 29. The Bluetooth standby mode display icon 1330 may be an icon indicating that a voice signal may be output by the first terminal 100.

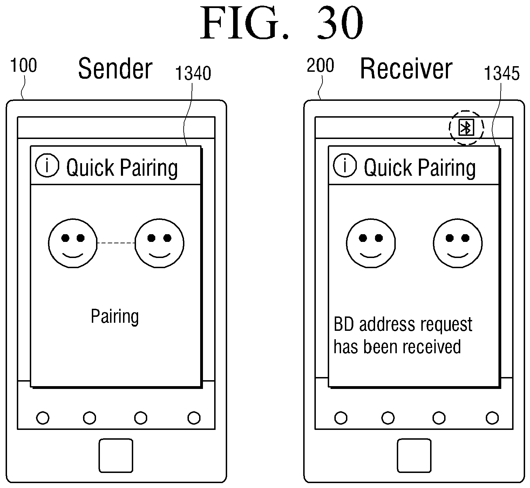

In this case, in response to the user entering a motion manipulation by tilting the first terminal 100 toward the screen of the second terminal 200, the first terminal 100 and the second terminal 200 may exchange a voice signal with each other, and may be Bluetooth-paired with each other, as shown in FIG. 30.

Referring to FIG. 30, the first terminal 100 may display a message 1340 requesting Bluetooth pairing, and the second terminal 200 may display a message 1345 that confirms the receipt of a Bluetooth pairing request.

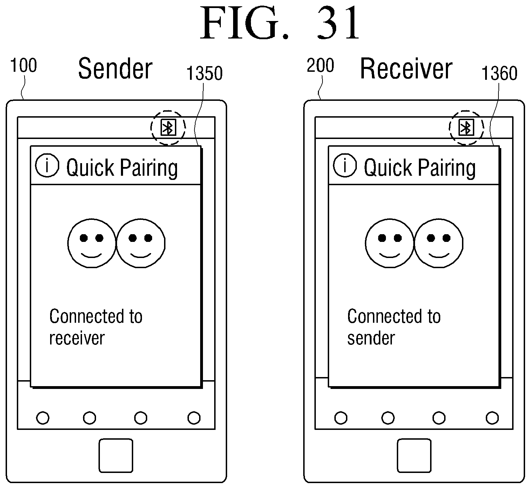

Referring to FIG. 31, in response to the Bluetooth pairing of the first terminal 100 and the second terminal 200, messages 1350 and 1360 indicating that the first terminal 100 and the second terminal 200 are connected may be displayed on the screens of the first terminal 100 and the second terminal 200, respectively.

In this manner, by using a voice signal, it is possible to Bluetooth-pair the first terminal 100 and the second terminal 200 even during the Bluetooth standby mode.

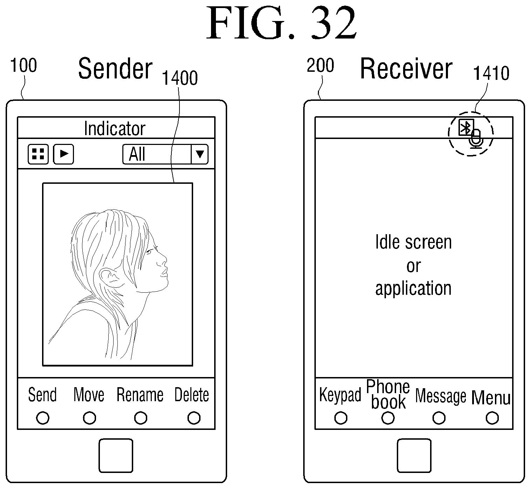

FIGS. 32 to 37 are diagrams illustrating an example of Bluetooth-pairing the first terminal 100 and the second terminal 200 by using a voice signal.

Referring to FIG. 32, a photo file 1400 is displayed on the screen of the first terminal 100. That is, the photo file 1400 is selected by the first terminal 100 as a target file to be transmitted. An icon 1410 indicating that the second terminal 200 is in the Bluetooth standby mode may be displayed at the top of the screen of the second terminal 200.

Referring to FIG. 29, in a case in which the second terminal 200 is in the Bluetooth standby mode, a Bluetooth pairing guide message 1430 may be displayed on the screen of the first terminal 100, and a Bluetooth standby mode display icon 1420 may be displayed at the top of the screen of the first terminal 100. The Bluetooth standby mode display icon 1420 may be an icon indicating that a voice signal may be output by the first terminal 100.

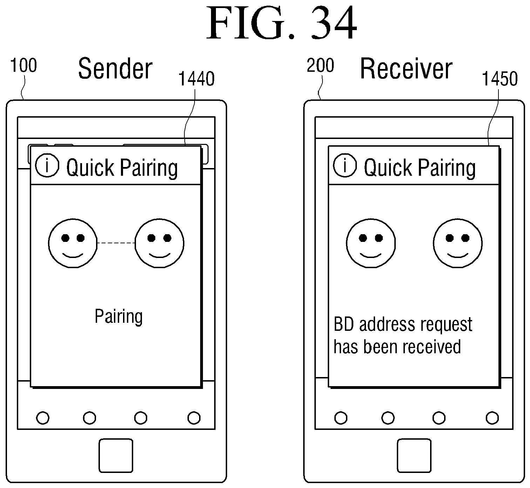

In this case, referring to FIG. 26, in response to the user entering a motion manipulation by tilting the first terminal 100 toward the screen of the second terminal 200, the first terminal 100 and the second terminal 200 may exchange a voice signal with each other, and may be Bluetooth-paired with each other, as shown in FIG. 34.

Referring to FIG. 34, the first terminal 100 may display a message 1440 requesting Bluetooth pairing, and the second terminal 200 may display a message 1450 that confirms the receipt of a Bluetooth pairing request.

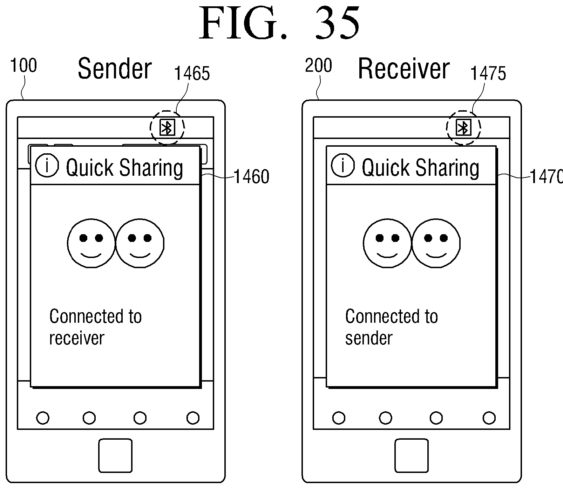

Referring to FIG. 35, in response to the Bluetooth pairing of the first terminal 100 and the second terminal 200, messages 1460 and 1470 indicating that the first terminal 100 and the second terminal 200 are connected may be displayed on the screens of the first terminal 100 and the second terminal 200, respectively, and icons 1465 and 1475 that confirm that the first terminal 100 and the second terminal 200 have been Bluetooth-connected may be displayed on the screens of the first terminal 100 and the second terminal 200, respectively.

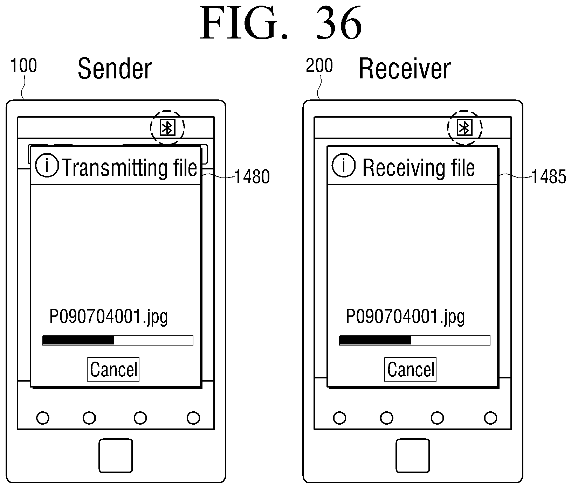

Referring to FIG. 36, the first terminal 100 may transmit the photo file 1400 to the second terminal 100. In this case, the first terminal 100 may display a file transmission window 1480 on its screen, and the second terminal 200 may display a file reception window 1485 on its screen.

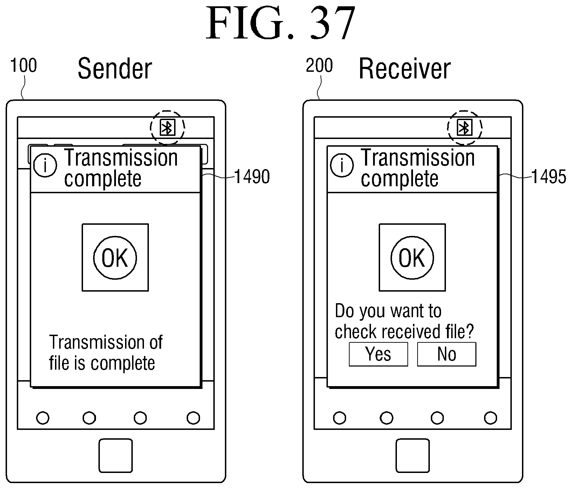

Referring to FIG. 37, in response to the completion of the transmission of the photo file 1400, the first terminal 100 may display a message 1490 indicating that the transmission of the photo file 1400 is complete, and the second terminal 200 may display a message 1495 indicating that the receipt of the photo file 1400 is complete.

In this manner, by using a voice signal, it is possible to Bluetooth-pair the first terminal 100 and the second terminal 200 even during the Bluetooth standby mode.

In the above examples, the first terminal 100 may serve as a Bluetooth transmitter, and the second terminal 200 may serve as a Bluetooth receiver. The first terminal 100 and the second terminal 200 may both be able to perform a data transmission function and a data reception function.

For example, in response to the detection of a movement during the Bluetooth standby mode, the first terminal 100 may receive data from the second terminal 200 via a Bluetooth communication. In this case, the second terminal 200 from which no movement is detected may serve as a Bluetooth transmitter.

Examples of the first terminal 100 and the second terminal 200 include nearly all types of devices equipped with a Bluetooth function such as, for example, mobile terminals, mobile phones, personal digital assistants (PDAs), smart phones, digital multimedia broadcasting (DMB) phones, and the like.

It will be apparent to those skilled in the art that various modifications and variation can be made in the present invention without departing from the scope of the invention. Thus, it is intended that the present invention cover the modifications and variations of this invention provided they come within the scope of the appended claims.

## Claims

1. A Bluetooth communication method of a first terminal (100) that communicates with a second terminal (200) via Bluetooth, the Bluetooth communication method comprising:
setting (S220) the first terminal (100) in a Bluetooth standby mode;
in response to the detection of a movement during the Bluetooth standby mode, determining (S550) whether the first terminal (100) is paired with the second terminal (200);
in response to the first terminal (100) not being paired with the second terminal (200), pairing (S240-S260) the first terminal (100) with the second terminal (200); and
transmitting (S270) data to the second terminal (200) via the Bluetooth communication; and
wherein the pairing comprises:
outputting (S240) a Bluetooth device, BD, address as a voice signal; and
in response to receipt (S255) of a voice signal requesting a Bluetooth connection from the second terminal (200), pairing (S260) the first terminal (100) with the second terminal (200); and
wherein the Bluetooth standby mode is an operating mode during which a voice output unit (125), a voice input unit (123), a motion sensor (150), and a Bluetooth communication unit (110) of the first terminal (100) are activated.

2. The Bluetooth communication method of claim 1, wherein the voice signals are dual-tone multi-frequency, DTMF, voice signals.

3. The Bluetooth communication method of any one of claims 1 to 2, wherein the second terminal (200) is a terminal set in the Bluetooth standby mode.

4. A first terminal (100) that communicates with a second terminal (200) via Bluetooth, the first terminal comprising:
a Bluetooth communication unit (110) arranged to transmit data to or receive data from the second terminal (200) via a Bluetooth communication;
a motion sensor (150) arranged to detect a movement of the first terminal (100);
a voice output unit (125) arranged to output voice data; and
a control unit (170) arranged to:
set (S220) the first terminal (100) in a Bluetooth standby mode;
in response to a movement being detected by the motion sensor (150) during the Bluetooth standby mode, determine (S550) whether the first terminal (100) is paired with the second terminal (200);
pair (S240-S260) the first terminal (100) with the second terminal (200) if the first terminal (100) is not paired with the second terminal (200); and
control to transmit (S270) data to the second terminal (200) via the Bluetooth communication;
wherein, to pair the first terminal (100) with the second terminal (200), the control unit (170) is arranged to:
convert a BD address of the first terminal (100) into a voice signal;
output (S240) the voice signal via the voice output unit (125); and
in response to receipt (255) of a voice signal requesting a Bluetooth connection from the second terminal (200), pair (S260) the first terminal (100) with the second terminal (200); and
wherein the Bluetooth standby mode is an operating mode during which the voice output unit (125), a voice input unit (123), the motion sensor (150), and the Bluetooth communication unit (110) of the first terminal (100) are activated.

5. The first terminal (100) of claim 4, wherein the voice signals are dual-tone multi-frequency, DTMF, voice signals.

6. The first terminal (100) of any one of claims 4 to 5 wherein the second terminal (200) is a terminal set in the Bluetooth standby mode.

7. The first terminal (100) of claim 4, wherein, to pair the first terminal (100) with the second terminal (200), the control unit (170) is arranged to:
control (S1045) a time of the transmission of the output voice signal to be stored;
receive (S1060) a time of receipt of the voice signal received from the second terminal (200); and
in response to the transmission time of the output voice signal coinciding with the receipt time of the received voice signal, select the second terminal (200) as a target terminal for the first terminal (100) to Bluetooth communicate with.

8. The first terminal (100) of claim 4, wherein, to pair the first terminal (100) with the second terminal (200), the control unit (170) is arranged to:
store (S1145) first information on the output voice signal;
receive (S1160) second information on the voice signal received from the second terminal (200); and
in response to the first information coinciding with the second information, select the second terminal (200) as a target terminal for the first terminal (100) to communicate with via Bluetooth.

9. A second terminal (200) that communicates with a first terminal (100) via Bluetooth, the second terminal (200) comprising:
a Bluetooth communication unit (210) arranged to transmit data to or receive data from the first terminal (100) via a Bluetooth communication;
a motion sensor (250) arranged to detect a movement of the second terminal (200);
a voice output unit (225) arranged to output voice data; and
a control unit (270) arranged to:
set (S225) the second terminal (200) in a Bluetooth standby mode;
receive (S245) a Bluetooth device, BD, address as a voice signal from the first terminal (100); and
transmit (S250) a voice signal requesting a Bluetooth connection to the first terminal (100);
wherein the Bluetooth standby mode is an operating mode during which the voice output unit (225), a voice input unit (223), the motion sensor (250), and the Bluetooth communication unit (210) of the second terminal (200) are activated.

10. The second terminal (200) of claim 9, wherein the voice signals are dual-tone multi-frequency, DTMF, voice signals.

## Patentansprüche

1. Bluetooth-Kommunikationsverfahren eines ersten Endgeräts (100), das mit einem zweiten Endgerät (200) über Bluetooth kommuniziert, wobei das Bluetooth-Kommunikationsverfahren aufweist:
ein Einstellen (S220) des ersten Endgeräts (100) in einen Bluetooth-Bereitschaftsmodus; in Reaktion auf das Erkennen einer Bewegung während des Bluetooth-Bereitschaftsmodus ein Bestimmen (S550), ob das erste Endgerät (100) mit dem zweiten Endgerät (200) gekoppelt ist;
in Reaktion darauf, dass das erste Endgerät (100) nicht mit dem zweiten Endgerät (200) gekoppelt ist, ein Koppeln (S240 bis S260) des ersten Endgeräts (100) mit dem zweiten Endgerät (200);
und ein Übertragen (S270) von Daten zu dem zweiten Endgerät (200) über die Bluetooth-Kommunikation;
und wobei das Koppeln aufweist:
ein Ausgeben (S240) einer Adresse einer Bluetooth-Einheit, BD, als ein Sprachsignal; und
in Reaktion auf einen Empfang (S255) eines Sprachsignals, das eine Bluetooth-Verbindung von dem zweiten Endgerät (200) anfordert, ein Koppeln (S260) des ersten Endgeräts (100) mit dem zweiten Endgerät (200);
und wobei der Bluetooth-Bereitschaftsmodus ein Betriebsmodus ist, während dem eine Sprachausgabeeinheit (125), eine Spracheingabeeinheit (123), ein Bewegungssensor (150) und eine Bluetooth-Kommunikationseinheit (110) des ersten Endgeräts (100) aktiviert werden.

2. Bluetooth-Kommunikationsverfahren nach Anspruch 1, wobei die Sprachsignale Zweiton-Mehrfrequenz-, DTMF, Sprachsignale sind.

3. Bluetooth-Kommunikationsverfahren nach einem der Ansprüche 1 bis 2, wobei das zweite Endgerät (200) ein in den Bluetooth-Bereitschaftsmodus gesetztes Endgerät ist.

4. Erstes Endgerät (100), das mit einem zweiten Endgerät (200) über Bluetooth kommuniziert, wobei das erste Endgerät aufweist:
eine Bluetooth-Kommunikationseinheit (110), die angeordnet ist, um Daten zu dem zweiten Endgerät (200) zu übertragen oder Daten von diesem mittels Bluetooth-Kommunikation zu empfangen;
einen Bewegungssensor (150), der angeordnet ist, um eine Bewegung des ersten Endgeräts (100) zu erkennen;
eine Sprachausgabeeinheit (125), die angeordnet ist, um Sprachdaten auszugeben; und eine Steuereinheit (170), die angeordnet ist zum:
Einstellen (S220) des ersten Endgeräts (100) in einen Bluetooth-Bereitschaftsmodus;
in Reaktion darauf, dass durch den Bewegungssensor (150) eine Bewegung während des Bluetooth-Bereitschaftsmodus erkannt wird, Bestimmen (S550), ob das erste Endgerät (100) mit dem zweiten Endgerät (200) gekoppelt ist;
wenn das erste Endgerät (100) nicht mit dem zweiten Endgerät (200) gekoppelt ist, Koppeln (S240 bis S260) des ersten Endgeräts (100) mit dem zweiten Endgerät (200);
und Steuern zum Übertragen (S270) von Daten zu dem zweiten Endgerät (200) über die Bluetooth-Kommunikation;
wobei die Steuereinheit (170) zum Koppeln des ersten Endgeräts (100) mit dem zweiten Endgerät (200) angeordnet ist zum:
Umwandeln einer BD-Adresse des ersten Endgeräts (100) in ein Sprachsignal;
Ausgeben (S240) des Sprachsignals über die Sprachausgabeeinheit (125); und
in Reaktion auf den Empfang (255) eines Sprachsignals, das eine Bluetooth-Verbindung von dem zweiten Endgerät (200) anfordert, Koppeln (S260) des ersten Endgeräts (100) mit dem zweiten Endgerät (200);
und wobei der Bluetooth-Bereitschaftsmodus ein Betriebsmodus ist, während dem die Sprachausgabeeinheit (125), eine Spracheingabeeinheit (123), der Bewegungssensor (150) und die Bluetooth-Kommunikationseinheit (110) des ersten Endgeräts (100) aktiviert werden.

5. Erstes Endgerät (100) nach Anspruch 4, wobei die Sprachsignale Zweiton-Mehrfrequenz-, DTMF, Sprachsignale sind.

6. Erstes Endgerät (100) nach einem der Ansprüche 4 bis 5, wobei das zweite Endgerät (200) ein in den Bluetooth-Bereitschaftsmodus gesetztes Endgerät ist.

7. Erstes Endgerät (100) nach Anspruch 4, wobei die Steuereinheit (170) zum Koppeln des ersten Endgeräts (100) mit dem zweiten Endgerät (200) angeordnet ist zum:
Steuern (S1045) einer Zeit der Übertragung des zu speichernden Ausgabesprachsignals;
Empfangen (S1060) einer Empfangszeit des Sprachsignals, das von dem zweiten Endgerät (200) empfangen wird;
und in Reaktion darauf, dass die Übertragungszeit des Ausgabesprachsignals mit der Empfangszeit des empfangenen Sprachsignals zusammenfällt, Auswählen des zweiten Endgeräts (200) als ein Zielendgerät für das erste Endgerät (100), mit dem über Bluetooth kommuniziert werden soll.

8. Erstes Endgerät (100) nach Anspruch 4, wobei die Steuereinheit (170) zum Koppeln des ersten Endgeräts (100) mit dem zweiten Endgerät (200) angeordnet ist zum:
Speichern (S1145) von ersten Informationen auf dem Ausgabesprachsignal;
Empfangen (S1160) von zweiten Informationen auf dem Sprachsignal, das von dem zweiten Endgerät (200) empfangen wurde;
und in Reaktion auf die ersten Informationen, die mit den zweiten Informationen zusammenfallen, Auswählen des zweiten Endgeräts (200) als ein Zielendgerät für das erste Endgerät (100), mit dem über Bluetooth kommuniziert werden soll.

9. Zweites Endgerät (200), das mit einem ersten Endgerät (100) über Bluetooth kommuniziert, wobei das zweite Endgerät (200) aufweist:
eine Bluetooth-Kommunikationseinheit (210), die angeordnet ist, um Daten zu dem ersten Endgerät (100) zu übertragen oder Daten von diesem mittels Bluetooth-Kommunikation zu empfangen;
einen Bewegungssensor (250), der angeordnet ist, um eine Bewegung des zweiten Endgeräts (200) zu erkennen;
eine Sprachausgabeeinheit (225), die angeordnet ist, um Sprachdaten auszugeben; und eine Steuereinheit (270), die angeordnet ist zum:
Einstellen (S225) des zweiten Endgeräts (200) in einen Bluetooth-Bereitschaftsmodus;
Empfangen (S245) einer Adresse einer Bluetooth-Einheit, BD, als ein Sprachsignal von dem ersten Endgerät (100);
und Übertragen (S250) eines Sprachsignals, das eine Bluetooth-Verbindung zu dem ersten Endgerät (100) anfordert;
wobei der Bluetooth-Bereitschaftsmodus ein Betriebsmodus ist, während dem die Sprachausgabeeinheit (225), eine Spracheingabeeinheit (223), der Bewegungssensor (250) und die Bluetooth-Kommunikationseinheit (210) des zweiten Endgeräts (200) aktiviert werden.

10. Zweites Endgerät (200) nach Anspruch 9, wobei die Sprachsignale Zweiton-Mehrfrequenz-, DTMF, Sprachsignale sind.

## Revendications

1. Procédé de communication Bluetooth d'un premier terminal (100) qui communique avec un deuxième terminal (200) via Bluetooth, le procédé de communication Bluetooth comprenant :
la configuration (S220) du premier terminal (100) dans un mode de veille Bluetooth ; en réponse à la détection d'un mouvement pendant le mode de veille Bluetooth, la détermination (S550) si le premier terminal (100) est apparié au deuxième terminal (200);
en réponse au premier terminal (100) n'étant pas apparié au deuxième terminal (200), l'appariement (S240-S260) du premier terminal (100) au deuxième terminal (200) ;
et la transmission (S270) de données au deuxième terminal (200) via la communication Bluetooth ;
et dans lequel l'appariement comprend :
l'émission (S240) d'une adresse de dispositif Bluetooth, BD, sous forme d'un signal vocal ; et en réponse à la réception (S255) d'un signal vocal demandant une connexion Bluetooth depuis le deuxième terminal (200), l'appariement (S260) du premier terminal (100) au deuxième terminal (200) ;
et dans lequel le mode de veille Bluetooth est un mode opérationnel pendant lequel une unité de sortie de voix (125), une unité d'entrée de voix (123), un capteur de mouvement (150), et une unité de communication Bluetooth (110) du premier terminal (100) sont activés.

2. Procédé de communication Bluetooth selon la revendication 1, dans lequel les signaux vocaux sont des signaux vocaux multi-fréquences à deux tons, DTMF.

3. Procédé de communication Bluetooth selon l'une quelconque des revendications 1 à 2, dans lequel le deuxième terminal (200) est un terminal configuré dans le mode de veille Bluetooth.

4. Premier terminal (100) qui communique avec un deuxième terminal (200) via Bluetooth, le premier terminal comprenant :
une unité de communication Bluetooth (110) agencée pour transmettre des données à ou recevoir des données depuis le deuxième terminal (200) via une communication Bluetooth ;
un capteur de mouvement (150) agencé pour détecter un mouvement du premier terminal (100);
une unité de sortie de voix (125) agencée pour émettre des données de voix ; et
une unité de commande (170) agencée pour :
configurer (S220) le premier terminal (100) dans un mode de veille Bluetooth ; en réponse à un mouvement étant détecté par le capteur de mouvement (150) pendant le mode de veille Bluetooth, déterminer (S550) si le premier terminal (100) est apparié au deuxième terminal (200) ;
apparier (S240-S260) le premier terminal (100) au deuxième terminal (200) si le premier terminal (100) n'est pas apparié au deuxième terminal (200) ;
et commander de transmettre (S270) des données au deuxième terminal (200) via la communication Bluetooth ;
dans lequel, pour apparier le premier terminal (100) au deuxième terminal (200), l'unité de commande (170) est agencée pour :
convertir une adresse de BD du premier terminal (100) en un signal vocal ;
émettre (S240) le signal vocal via l'unité de sortie de voix (125) ; et
en réponse à la réception (255) d'un signal vocal demandant une connexion Bluetooth depuis le deuxième terminal (200), apparier (S260) le premier terminal (100) au deuxième terminal (200) ;
et dans lequel le mode de veille Bluetooth est un mode opérationnel pendant lequel l'unité de sortie de voix (125), une unité d'entrée de voix (123), le capteur de mouvement (150), et l'unité de communication Bluetooth (110) du premier terminal (100) sont activés.

5. Premier terminal (100) selon la revendication 4, dans lequel les signaux vocaux sont des signaux vocaux multi-fréquences à deux tons, DTMF.

6. Premier terminal (100) selon l'une quelconque des revendications 4 à 5, dans lequel le deuxième terminal (200) est un terminal configuré dans le mode de veille Bluetooth.

7. Premier terminal (100) selon la revendication 4, dans lequel, pour apparier le premier terminal (100) au deuxième terminal (200), l'unité de commande (170) est agencée pour :
commander (S1045) une heure de la transmission du signal vocal émis devant être stocké ;
recevoir (S1060) une heure de réception du signal vocal reçu depuis le deuxième terminal (200) ;
et en réponse à l'heure de transmission du signal vocal émis coïncidant avec l'heure de réception du signal vocal reçu, sélectionner le deuxième terminal (200) en tant que terminal cible pour que le premier terminal (100) communique en Bluetooth avec celui-ci.

8. Premier terminal (100) selon la revendication 4, dans lequel, pour apparier le premier terminal (100) au deuxième terminal (200), l'unité de commande (170) est agencée pour :
stocker (S1145) des premières informations sur le signal vocal émis ;
recevoir (S1160) des deuxièmes informations sur le signal vocal reçu depuis le deuxième terminal (200) ;
et en réponse aux premières informations coïncidant avec les deuxièmes informations, sélectionner le deuxième terminal (200) en tant que terminal cible pour que le premier terminal (100) communique en Bluetooth avec celui-ci.

9. Deuxième terminal (200) qui communique avec un premier terminal (100) via Bluetooth, le deuxième terminal (200) comprenant :
une unité de communication Bluetooth (210) agencée pour transmettre des données à ou recevoir des données depuis le premier terminal (100) via une communication Bluetooth ;
un capteur de mouvement (250) agencé pour détecter un mouvement du deuxième terminal (200);
une unité de sortie de voix (225) agencée pour émettre des données de voix ; et
une unité de commande (270) agencée pour :
configurer (S225) le deuxième terminal (200) dans un mode de veille Bluetooth ;
recevoir (S245) une adresse de dispositif Bluetooth, BD, sous forme d'un signal vocal depuis le premier terminal (100) ;
et transmettre (S250) un signal vocal demandant une connexion Bluetooth au premier terminal (100) ;
dans lequel le mode de veille Bluetooth est un mode opérationnel pendant lequel l'unité de sortie de voix (225), une unité d'entrée de voix (223), le capteur de mouvement (250), et l'unité de communication Bluetooth (210) du deuxième terminal (200) sont activés.

10. Deuxième terminal (200) selon la revendication 9, dans lequel les signaux vocaux sont des signaux vocaux multi-fréquences à deux tons, DTMF.
